# EUROPÄISCHE PATENTSCHRIFT

(11) **EP 1 363 058 B1**
(45) Veröffentlichungstag und Bekanntmachung des Hinweises auf die Patenterteilung: **17.01.2007**
(21) Anmeldenummer: 03011381.5
(22) Anmeldetag: 19.05.2003
(51) Int. Cl.: F16L 5/10

(54) **Mauerkragen**
Sealing collar for openings through walls
Dispositif d'étancheité pour ouvertures dans les murs

(30) Priorität: 17.05.2002 DE 20207753 U
(43) Veröffentlichungstag der Anmeldung: 19.11.2003
(73) Patentinhaber: Klinger AG, 6304 Zug (CH)
(72) Erfinder: Eisenach Frank-Peter, 42929 Wermelskirchen (DE)
(74) Vertreter: Sparing Röhl Henseler Patentanwälte European Patent Attorneys

(56) Entgegenhaltungen:
- DE-A1- 3 114 464
- DE-U1- 20 120 639
- DE-U1- 29 619 973

## Beschreibung

Die Erfindung betrifft einen Mauerkragen.

Mauerkragen werden bei der Einbindung von Rohrleitungen in Bauwerke wegen anstehendem Wasser oder Grundwasser verwendet, so etwa bei der Einführung von erdverlegten Rohrleitungen in Betonwände oder Schächte ebenso wie beim Einbau von Rohrleitungen in Schwimmbecken, Stauwerken od.dgl. Hierbei dienen Mauerkragen zur Wasserabdichtung, die auf die entsprechenden Rohrleitungen aufgeschoben und etwa mittels Mörtel im Mauerwerk eingebettet werden.

Zu diesem Zweck sind Mauerkragen bekannt, die eine Überschiebemuffe mit an deren Innenfläche angeordneten Rippen und einen mittig hieran über einen im Schnitt etwa dreieckigen Sockelbereich befestigten Dichtkragen mit einer Vielzahl von auf beiden Seiten hiervon angeordneten ringförmigen Verstärkungen aufweisen. Hierbei sind jedoch Montage- und Absperrsicherheit nicht zufriedenstellend. So können Spannbänder, die zur Fixierung des Mauerkragens um diesen gelegt werden, abrutschen und schmale, in großem Abstand zueinander angeordnete Rippen können leicht bei der Montage beschädigt werden.

Aus DE-U-201 20 639 ist ein Mauerkragen bekannt, bei dem an den Seitenrändern der Überschiebemuffe nach außen gerichtete umlaufende Vorsprünge vorgesehen sind, die ein Abrutschen von Spannbändern verhindern sollen. Außerdem ist die Überschiebemuffe innenseitig mit relativ weit zueinander und zum Seitenrand beabstandeten, im Schnitt dreieckigen Vorsprüngen versehen. Dies führt dazu, daß die Vorsprünge durch die Spannbändern unregelmäßig verquetscht werden, zumal die Spannbänder nicht immer an den Vorsprüngen benachbart zu den Seitenrändern der Überschiebemuffe anliegen, sondern auch weiter innen angeordnet werden können.

Aus DE 31 14 464 A ist ein Mauerkragen bekannt, der aus einer Überschiebemuffe und einem Dichtkragen besteht, wobei letzterer einen wulstförmigen Ansatz haben kann und eine ringförmige Verstärkungsrippe aufweist. Die Überschiebemuffe besitzt außenseitig Nuten zur Aufnahme von Spannbändern, während innenseitig zueinander beabstandet angeordnete, trapezförmige Rippen vorgesehen sind, die außen an den Muffenrändern senkrecht mit letzteren verlaufen. Ein derartiger Mauerkragen bietet keine genügende Montage- und Abdichtungssicherheit.

Aufgabe der Erfindung ist es, einen Mauerkragen zu schaffen, der eine erhöhte Montage- und Abdichtungssicherheit bietet.

Diese Aufgabe wird entsprechend den Merkmalen des Anspruchs 1 gelöst.

Mit einem derartigen Mauerkragen, bei dem die Überschiebemuffe außenseitig auf beiden Seiten benachbart zu dem Sockelbereich mit einer umlaufenden Nut zur Aufnahme eines Spannbandes und an der Innenseite mit unmittelbar aneinander grenzenden Keilrippen, die an den Muffenrändern eine Fase bilden, versehen ist, ergibt sich eine erhöhte Montagesicherheit, Formstabilität bei verbesserter mechanischer Verankerung im Mauerwerk und Absperrsicherheit.

Weitere Ausgestaltungen der Erfindung sind der nachfolgenden Beschreibung und den Unteransprüchen zu entnehmen.

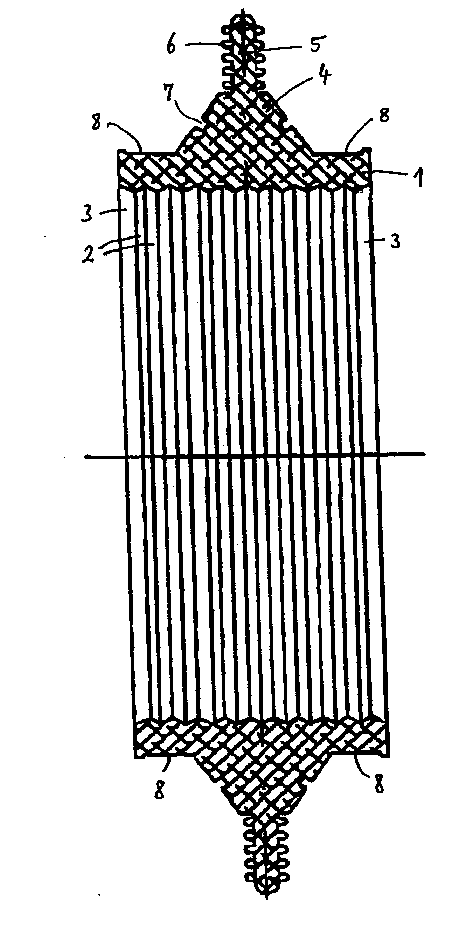

Die Erfindung wird nachstehend anhand eines in der beigefügten Abbildung im Schnitt dargestellten Ausführungsbeispiels eines Mauerkragens näher erläutert.

Der dargestellte Mauerkragen umfaßt eine Überschiebemuffe 1, die an der Innenfläche mit einer Vielzahl von im Schnitt dreieckigen, unmittelbar aneinander grenzenden Keilrippen 2, die an den Muffenrändern eine Fase 3 von vorzugsweise etwa 45° bilden, versehen ist. Durch die Fase 3 läßt sich der Mauerkragen leicht und ohne Beschädigung der Keilrippen 2 auf ein Rohrende aufschieben. Die Vielzahl der Keilrippen 2 sichert eine gute Abdichtfunktion. Die Keilrippen 2 besitzen eine relativ geringe Tiefe von beispielsweise 2 mm.

Die Überschiebemuffe 1 besitzt mittig einen nach außen gerichteten etwa dreieckigen Sockelbereich 4, von dem sich radial nach außen ein Dichtkragen 5 erstreckt. Der Dichtkragen 5 besitzt beidseitig jeweils eine Reihe von konzentrisch mit Abstand zueinander angeordneten, umlaufenden, ringförmigen Verstärkungen 6.

Der Sockelbereich 4 verhindert ein Verformen des Dichtkragens 5 beim Einmauern bzw. Einbetonieren. Etwa in der Mitte des Sockelbereichs 4 ist dieser auf jeder Seite mit einer umlaufenden Nut 7 versehen. Diese gibt dem Sockelbereich 4 durch beim Einmauern bzw. Einbetonieren eingedrungenes Füllmaterial zusätzliche Festigkeit, wodurch ein Umklappen des Dichtkragens 5 verhindert wird.

Der Dichtkragen 5 ist am Außenrand abgerundet, so daß sich ein sicheres Einbringen des Füllmaterials beim Einmauern bzw. Einbetonieren auch bei waagerechten Rohrleitungen zwischen die ringförmigen Verstärkungen 6 ergibt. Die an ihrer umlaufenden Außenkante abgerundeten Verstärkungen 6 geben einen sicheren Halt im Füllmaterial und lassen ein Eindringen von Feuchtigkeit, Grundwasser etc. über den Mauerkragen in das Mauerwerk nicht zu.

Die Überschiebemuffe 1 besitzt außenseitig auf beiden Seiten benachbart zu dem Sockelbereich 4 eine umlaufende Nut 8 zur Aufnahme eines Spannbandes, so daß ein falsches Aufsetzen und Abrutschen der Spannbänder vermieden wird.

Der Mauerkragen kann mittels einer Preßform gefertigt werden, er kann aber auch aus extrudiertem Endlosmaterial mit einer Länge entsprechend dem Kundenwunsch mittels eines entsprechenden Preßwerkzeugs zusammenvulkanisiert sein.

## Patentansprüche

1. Mauerkragen umfassend eine Überschiebemuffe (1) mit an deren Innenfläche angeordneten Rippen (2) und einen mittig hieran über einen im Schnitt etwa dreieckigen Sockelbereich (4) befestigten Dichtkragen (5) mit einer Vielzahl von auf beiden Seiten hiervon angeordneten ringförmigen Verstärkungen (6), wobei die Überschiebemuffe (1) außenseitig auf beiden Seiten benachbart zu dem Sockelbereich (4) mit einer umlaufenden Nut (8) zur Aufnahme eines Spannbandes versehen ist, **dadurch gekennzeichnet, daß** die Überschiebemuffe (1) an der Innenseite mit unmittelbar aneinander grenzenden Keilrippen (2), die an den Muffenrändern eine Fase (3) bilden, versehen ist.

2. Mauerkragen nach Anspruch 1, **dadurch gekennzeichnet, daß** der Sockelbereich (4) etwa in seiner Mitte eine umlaufende Nut (7) aufweist.

3. Mauerkragen nach Anspruch 1 oder 2, **dadurch gekennzeichnet, daß** der Dichtkragen (5) am Außenrand abgerundet ist.

4. Mauerkragen nach einem der Ansprüche 1 bis 3, **dadurch gekennzeichnet, daß** die Keilrippen (2) eine Neigung von etwa 45° aufweisen.

5. Mauerkragen nach einem der Ansprüche 1 bis 4, **dadurch gekennzeichnet, daß** er aus extrudiertem Material gepreßt ist.

## Claims

1. Wall collar comprising a push-over sleeve (1), with ribs (2) arranged on its inner surface, and, attached centrally to this sleeve via a base region (4) which is approximately triangular in section, a sealing collar (5) with a plurality of annular reinforcements (6) arranged on both sides thereof, the push-over sleeve (1) being provided on the outside on both sides adjacent to the base region (4) with a groove (8) running around it for receiving a clamping band, **characterized in that** the push-over sleeve (1) is provided on the inner side with V-ribs (2) adjoining one another directly, which form a bevel (3) at the sleeve edges.

2. Wall collar according to Claim 1, **characterized in that** the base region (4) has a groove (7) running around it approximately in its centre.

3. Wall collar according to Claim 1 or 2, **characterized in that** the sealing collar (5) is rounded at the outer edge.

4. Wall collar according to one of the Claims 1 to 3, **characterized in that** the V-ribs (2) have an inclination of approximately 45°.

5. Wall collar according to one of Claims 1 to 4, **characterized in that** it is pressed from extruded material.

## Revendications

1. Couronne d'étanchéité pour ouvertures murales, comportant un manchon d'emboîtement (1) comprenant des nervures (2) agencées sur sa surface intérieure et un col d'étanchéité (5) fixé au milieu sur ledit manchon au moyen d'une zone de socle (4) de section approximativement triangulaire et pourvu d'une multitude de renforts annulaires (6) agencés de part et d'autre dudit col, le manchon d'emboîtement (1) étant pourvu du côté extérieur, de part et d'autre au voisinage de la zone de socle (4), d'une gorge périphérique (8) pour recevoir un ruban de serrage, **caractérisée en ce que** le manchon d'emboîtement (1) est pourvu, sur le côté intérieur, de nervures en coin (2) directement adjacentes qui forment un chanfrein (3) sur les bords du manchon.

2. Couronne selon la revendication 1, **caractérisée en ce que** la zone de socle (4) présente approximativement à son milieu une gorge périphérique (7).

3. Couronne selon la revendication 1 ou 2, **caractérisée en ce que** le col d'étanchéité (5) est arrondi au bord extérieur.

4. Couronne selon l'une des revendications 1 à 3, **caractérisée en ce que** les nervures en coin (2) présentent une inclinaison d'environ 45°.

5. Couronne selon l'une des revendications 1 à 4, **caractérisée en ce qu'**elle est réalisée par pressage en matériau extrudé.
